# EUROPÄISCHE PATENTANMELDUNG

(11) **EP 3 370 051 A2**
(43) Veröffentlichungstag der Anmeldung: **05.09.2018**
(21) Anmeldenummer: 18159831.9
(22) Anmeldetag: 02.03.2018
(51) Int. Cl.: G01L 9/00, G01L 9/10, G01L 9/16

(54) **DRUCKSENSOR SOWIE DRUCKMESSVERFAHREN**

(30) Priorität: 03.03.2017 DE 102017104547
(71) Anmelder: Trafag AG, 8706 Bubikon (CH)
(72) Erfinder: SCHANZ, Christoph, D-72636 Frickenhausen (DE)
(74) Vertreter: Kastel, Stefan

(57) **Zusammenfassung**

Zum Schaffen eines kostengünstig herstellbaren, genauer arbeitenden und hohen Berstdrücken widerstehenden Drucksensors schafft die Erfindung einen Drucksensor (10), mit wenigstens einer durch einen zu messenden Druck zu beaufschlagenden Membran (12) und einer magnetoelastischen Spannungserfassungseinrichtung (14) zum magnetoelastischen Erfassen einer durch die Druckbeaufschlagung bedingten mechanischen Spannung.

## Beschreibung

Die Erfindung betrifft einen Drucksensor, mit wenigstens einer durch einen zu messenden Druck zu beaufschlagenden Membran. Weiter betrifft die Erfindung ein Verfahren zum Messen eines Druckes, umfassend den Schritt: Beaufschlagen einer Membran mit dem zu messenden Druck.

Ein solcher Drucksensor und ein solches Druckmessverfahren sind beispielsweise aus den folgenden Dokumenten aus dem Stand der Technik bekannt:
D1 DE 10 2012 100 942 A1
D2 DE 10 2013 114 728 A1
D3 EP1 281 947 A1
D4 EP 1 677 090 A1
D5 EP 2 251 664 A1
D6 EP 2 446 239 B1.

Aus den vorerwähnten Druckschriften sind Drucksensoren mit einer durch den zu messenden Druck zu beaufschlagenden Membran bekannt, die insbesondere an einem Druckkörper, beispielsweise gebildet aus einem einstückigen Stahlkörper, als integraler Bestandteil ausgebildet ist. Durch einen Druck wird die Membran ausgelenkt, und die Auslenkung wird gemessen und in ein Signal umgewandelt. Die Messung der Auslenkung erfolgt bei den Drucksensoren nach den Dokumenten D1 bis D6 durch ein resistives Verfahren, insbesondere mittels Dehnmessstreifen, deren elektrischer Widerstand sich bei Auslenkung der Membran ändert, wobei der elektrische Widerstand zum Beispiel über eine Brückenschaltung gemessen und in das Signal umgewandelt wird.

Andere auf dem Markt erhältliche Drucksensoren messen Auslenkungen einer zu beaufschlagenden Membran kapazitiv oder optisch oder induktiv, z.B. mittels Wirbelstrommessungen. Ein Beispiel für eine Messung einer Membranauslenkung mittels Wirbelstrommessungen ist in dem folgenden Dokument beschrieben:
D7 EP 2 867 639 B1.

Bei allen bisher bekannten Drucksensoren werden somit Auslenkungen der Membran gemessen und in ein Signal umgewandelt.

Die Erfindung hat sich zur Aufgabe gestellt, einen Drucksensor und ein Verfahren zum Messen eines Drucks mittels Beaufschlagung einer Membran zu schaffen, die universeller einsetzbar sind und gegenüber bisherigen Sensoren und Verfahren bei gleicher oder erhöhter Genauigkeit eine höhere Druckfestigkeit aufweisen.

Zum Lösen dieser Aufgabe schafft die Erfindung einen Drucksensor nach Anspruch 1 sowie ein Verfahren nach dem Nebenanspruch.

Vorteilhafte Ausgestaltungen sind Gegenstand der Unteransprüche.

Die Erfindung schafft gemäß einem Aspekt einen Drucksensor, mit wenigstens einer durch einen zu messenden Druck zu beaufschlagenden Membran und einer magnetoelastischen Spannungserfassungseinrichtung zum magnetoelastischen Erfassen einer durch die Druckbeaufschlagung bedingten mechanischen Spannung.

Vorzugsweise ist eine magnetoelastische Spannungserfassungseinrichtung, die mit einem aktiven Aufmagnetisieren arbeitet, vorgesehen.

Es ist bevorzugt, dass die wenigstens eine Membran zumindest teilweise aus einem ferromagnetischen Material gebildet ist und dass die magnetoelastische Spannungserfassungseinrichtung zum magnetoelastischen Erfassen einer mechanischen Spannung in der Membran ausgebildet ist.

Es ist bevorzugt, dass die magnetoelastische Spannungserfassungseinrichtung mit einem aktiven Aufmagnetisieren arbeitet.

Es ist bevorzugt, dass die magnetoelastische Spannungserfassungseinrichtung zum Erfassen einer Richtung oder Richtungsänderung von Magnetfeldlinien eines in die Membran oder in eine an die Membran gekoppelten Element induzierten Magnetfelds ausgebildet ist, um aus der erfassten Richtung oder Richtungsänderung eine mechanische Spannung in der Membran bzw. dem mit der Membran gekoppelten Element zu erfassen.

Es ist bevorzugt, dass die magnetoelastische Spannungserfassungseinrichtung wenigstens eine Magnetfelderzeugungseinrichtung zum Erzeugen eines durch einen aufgrund des zu messenden Drucks mechanisch belasteten Bereich laufenden Magnetfeldflusses und eine Magnetfeldflusserfassungseinrichtung zum Erfassen eines Magnetfeldflusses in dem mechanisch belasteten Bereich aufweist.

Es ist bevorzugt, dass die Magnetfelderzeugungseinrichtung wenigstens eine Erregerspule sowie einen Erregerspulenkern aufweist und dass die Magnetfeldflusserfassungseinrichtung wenigstens eine Messspule und einen Messspulenkern aufweist.

Es ist bevorzugt, dass die Magnetfelderfassungseinrichtung mehrere Messspulen aufweist, die auf unterschiedliche Magnetfeldflusslinien-Richtungen sensitiv sind.

Es ist bevorzugt, dass die magnetoelastische Spannungserfassungseinrichtung eine Erregerspule und ein Erregermagnetjoch zum Erzeugen eines Magnetfeldflusses in einem durch einen zu messenden Druck mechanisch belasteten Bereich, insbesondere der Membran, aufweist und eine Messspule und ein Messmagnetjoch zum Messen eines Magnetfeldflusses in dem durch den zu messenden Druck mechanisch belasteten Bereich aufweist, wobei das Erregermagnetjoch und das Messmagnetjoch einen Winkel zwischen 5° und 175° zueinander bilden.

Es ist bevorzugt, dass die magnetoelastische Spannungserfassungseinrichtung eine zentrale Erregerspule sowie eine erste Messspule, die durch eine erste Jochverbindung mit der Erregerspule zum Erzeugen und Messen eines ersten Magnetfeldflusses, der durch einen bei zu messenden Druck mechanisch belasteten Bereich, insbesondere der Membran, verläuft, verbunden ist, und eine zweite Messspule aufweist, die durch eine zweite Jochverbindung mit der Erregerspule zum Erzeugen und Messen eines zweiten Magnetfeldflusses, der durch den bei zu messenden Druck mechanisch belasteten Bereich verläuft, verbunden ist, derart, dass der erste und der zweite Magnetfeldfluss in dem bei Druck belasteten Bereich einen Winkel im Bereich zwischen 5° und 175° zueinander bilden.

Es ist bevorzugt, dass Spulen der magnetoelastischen Spannungserfassungseinrichtung als Planarspulen, insbesondere in Leiterplattentechnik, ausgebildet sind.

Es ist bevorzugt, dass die wenigstens eine Membran auf einer ersten Seite eine mit einem ersten Druck zu beaufschlagende erste Druckkammer und auf einer gegenüberliegenden Seite eine mit einem zweiten Druck beaufschlagbare zweite Druckkammer abschließt, wobei die magnetoelastische Spannungserfassungseinrichtung die mechanische Spannung in der Membran durch eine der Druckkammern hindurch erfasst.

Es ist bevorzugt, dass die erste Druckkammer mit einem ersten Druckkanal zum Beaufschlagen mit einem ersten zu messenden Druck in Fluidverbindung ist und die zweite Druckkammer mit einem zweiten Druckkanal zum Beaufschlagen mit einem zweiten zu messenden Druck in Fluidverbindung ist, um mittels der magnetoelastischen Spannungserfassungseinrichtung einen Differenzdruck zwischen dem ersten Druck und dem zweiten Druck zu messen. oder

Es ist bevorzugt, dass die erste Druckkammer mit einem ersten Druckkanal zum Beaufschlagen mit einem ersten zu messenden Druck in Fluidverbindung ist und die zweite Druckkammer ein Referenzdruckvolumen mit einem vorbestimmten Referenzdruck bildet, um mittels der magnetoelastische Spannungserfassungseinrichtung den Druck in der ersten Druckkammer durch Vergleich mit dem Referenzdruck als Absolutdruck zu erfassen.

Es ist bevorzugt, dass eine erste Membran zum Erfassen eines ersten Drucks und eine zweite Membran zur Erfassung eines zweiten Drucks vorgesehen sind.

Es ist bevorzugt, dass eine erste Membran zur Erfassung eines ersten Drucks und eine zweite Membran zur Bereitstellung eines Referenzmesswerts vorgesehen sind.

Es ist bevorzugt, dass das eine erste magnetoelastische Spannungserfassungseinrichtung zum Erfassen einer auf der ersten Membran wirkenden mechanischen Belastung und eine zweite magnetoelastische Spannungserfassungseinrichtung zum Erfassen einer auf der zweiten Membran wirkenden mechanischen Belastung und eine Auswerteeinrichtung zum Bestimmen eines Differenzwerts aus Ausgängen der ersten und der zweiten magnetoelastischen Spannungserfassungseinrichtung vorgesehen sind.

Gemäß einem weiteren Aspekt betrifft die Erfindung ein Verfahren zum Messen eines Druckes, umfassend:
a) Beaufschlagen einer Membran mit dem zu messenden Druck und
b) Erzeugen eines magnetischen Flusses in einem Bereich, der durch die Druckbeaufschlagung mechanisch belastet wird und
c) Messen einer durch die Druckbeaufschlagung der Membran erzeugten mechanischen Spannung mittels des magnetoelastischen Effekts durch Erfassen der Änderung der Richtung von Magnetfeldlinien des magnetischen Flusses.

Es ist bevorzugt, dass Schritt b) Erzeugen des magnetischen Flusses in einem durch die Druckbeaufschlagung mechanisch belasteten Bereich der zumindest teilweise aus ferromagnetischen Material gebildeten Membran enthält und dass Schritt c) Messen der mechanischen Spannung an der Membran durch Erfassen einer Änderung der Magnetfeldlinien in der Membran enthält.

Vorzugsweise umfasst das Verfahren den Schritt:
Erfassen eines Differenzdrucks zwischen einem ersten Druck und einem zweiten Druck durch Beaufschlagen der Membran mit dem ersten Druck auf einer ersten Seite und mit dem zweiten Druck auf einer gegenüberliegenden zweiten Seite.

Vorzugsweise umfasst das Verfahren den Schritt:
Erfassen eines Absolutdrucks durch Beaufschlagen einer ersten Seite der Membran mit dem zu messenden Druck und Beaufschlagen der gegenüberliegenden zweiten Seite der Membran mit einem vorbestimmten Referenzdruck und Bestimmen des Absolutdrucks durch Erfassen der Differenz zwischen zu messenden Druck und Referenzdruck.

Vorzugsweise umfasst das Verfahren den Schritt:
Vorsehen einer nicht durch den Druck beaufschlagten Referenzmembran und magnetoelastisches Erfassen einer mechanischen Spannung an der Referenzmembran um einen Referenzwert zu erhalten, wobei ein Messsignal differentiell durch Vergleich eines durch magnetoelastisches Erfassen einer mechanischen Spannung an der druckbeaufschlagten Membran erhaltenen Wert und des Referenzwerts erhalten wird.

Bei einer bevorzugten Ausgestaltung wird durch eine Spulenanordnung, die um den Magnetfeldgenerator herum angeordnet ist, durch denselben magnetischen Leiter - z.B. Ferritkern - ein geschlossener magnetischer Fluss erzeugt. Änderungen in der mechanischen Spannung des Bereichs, durch den der magnetische Fluss führt, führen zu einer Veränderung des magnetischen Kreises und damit zu einem Signal.

Vorzugsweise wird ein erster Magnetkreis, der sich zumindest teilweise in einer ersten Richtung durch die Membran erstreckt, und ein zweiter magnetischer Kreis ausgebildet, der sich im Wesentlichen in einer zweiten Richtung durch die Membran erstreckt, wobei ein Signal durch Vergleich von Änderungen in dem ersten und dem zweiten Magnetkreis erzeugt wird.

Vorzugsweise weist die Magnetfelderfassungseinrichtung ein erstes Messspulenpaar B1 und B2 und ein zweites Messspulenpaar A1 und A2 auf, wobei das erste Messspulenpaar im Wesentlichen in einer ersten Richtung beabstandet angeordnet wird und das zweite Messspulenpaar im Wesentlichen in einer sich zumindest teilweise quer zu der ersten Richtung erstreckenden zweiten Richtung beabstandet angeordnet wird. Eine mechanische Belastung an einer Membran oder einem damit gekoppelten Element, an die bzw. an das diese Anordnung gehalten wird, und in der bzw. in dem ein Magnetfeld induziert wird, führt zu einer Änderung in den Spulenpaaren B1 und B2, wobei die Spulenpaare A1 und A2 nicht oder weniger von der Änderung betroffen sind. Ein Messsignal ergibt sich vorzugsweise aus (A1 + A2) - (B1 + B2). Für das Messsignal relevante Größen sind die Änderungen der Induktivitäten, Amplituden und Phasen der Spulen.

Vorzugsweise sind die Spulen zur Erzeugung und/oder zur Erfassung von Magnetfeldern als Planarspulen ausgebildet. Besonders bevorzugt sind die Planarspulen durch integrierte Fertigungsmethoden, wie beispielsweise in Leiterplattentechnik, ausgebildet. Beispielsweise können spiralförmig angeordnete Leiter auf unterschiedlichen Leitungsschichten von Leiterplattenelementen ausgebildet werden und durch Aufeinanderlegen von solchen Leiterplattenelementen eine Spule oder eine Spulenanordnung mit mehreren Wicklungen gebildet werden. Eine derartige integrierte Fertigungstechnik ermöglicht es, den Sensor sehr kostengünstig herzustellen.

Im Folgenden werden Vorteile bevorzugter Ausgestaltungen der Erfindung näher erläutert.

Bevorzugte Ausgestaltungen der Erfindung betreffen insbesondere die Messung von Drücken von Fluiden in einem weiten Druckbereich (z.B. 50mbar bis 3000bar) mit einem magnetoelastischem Verfahren. Hierzu werden die Spannungen in einem unter Druck stehenden Körper magnetisch gemessen (Vilary Effekt).

Von großem Vorteil ist die Verwendung des Werkstoffes Stahl für den Körper, da dieser einen medienkompatiblen Einsatz bei recht unterschiedlichen Fluiden (Motorenöl, Hydrauliköl, Kraftstoff, Abwasser, Meereswasser, Bremsflüssigkeiten, Klimaanlagenmedien) erlauben.

Im Gegensatz zu herkömmlichen Drucksensoren, die entweder resisitiv, piezoresistiv, kapazitiv oder den magnetischen Wirbelstromeffekt ausnutzend arbeiten und dabei auf größeren Abstandsänderungen oder Auslenkungen der Membrane im Bereich von typisch 10 Mikrometer basieren, arbeiten die magnetoelastische Sensoren der bevorzugten Ausgestaltungen mit sehr kleinen, kaum detektierbaren Verformungen. Diese liegen vorzugsweise unter 1 Mikrometer (z.B. 0,0001µm bis 0,99µm), das eigentliche Messsignal wird durch mechanische Druck- und Zugspannungen in der Oberfläche generiert, die vorzugsweise im Bereich zwischen 10 und 200 MPa liegen.

Von Vorteil ist die Verwendung einer aktiven Technologie, die Magnetisierungsverluste über die Zeit verhindert, da ständig die Magnetisierung neu ausgebildet wird. Beispiele für mit dieser aktiven Technologie arbeitende besonders geeignete magnetoelastische Spannungserfassungseinrichtungen sind - für ganz andere Zwecke, nämlich zur Drehmomenterfassung in Drehwellen - in der WO2016119931A1, der WO2016198658A1 und der EP3064919A1 beschrieben, auf die für Einzelheiten hinsichtlich des Aufbaus der magnetoelastischen Spannungserfassungseinrichtung sowie hinsichtlich der Signalverarbeitung ausdrücklich verwiesen wird.

Im Gegensatz zu Dünnfilmsensoren, die gerne bei kritischen Medien beispielsweise, aber nicht abschließend, im Kühlkreislauf bei Klimaanlagen oder bei höheren Druckbereichen wie der Common-Rail-Drucküberwachung eingesetzt werden, verfügt die aktive, magnetoelastische Technologie über eine höhere Empfindlichkeit. So können bei recht langzeitstabilen, resistiven Dünnfilmzellen auf Basis der Wheatstone'schen Brückenschaltung mit der Funktionsschicht NiCr in etwa 2 mV/V als Ausgangssignal erwartet werden. Die Empfindlichkeit des vorgestellten aktiven, magnetoelastischen Verfahrens ist etwa 3-5 mal höher und liegt bei den meisten ferromagnetischen Materialien (bevorzugte Materialien für den Druckkörper und/oder die Membran sind 1.4542 Stähle mit hoher Zugfestigkeit wie sie für die Druckmesstechnik verwendet werden, 1.4435 = 316L korrosionsfeste Stähle, Duplexstähle wie zum Beispiel aber nicht abschließend 1.4462) bei 6-10 mV/V, so können bei einer typisch Versorgungsspannung von 5V Nutzsignale von 50mV bei einer mechanischen Spannung im Material von 200 MPa erwartet werden. Minimale Zug-Druckspannungen von bis zu 10 MPa können mit diesem Verfahren gemessen werden.

Die Baugröße der Planarspulen kann lateral in der Spulenebene bis zu einem Bereich von wenigen Millimetern (insbesondere 2 mm bis 20 mm) erfolgen, so zum Beispiel 6x6mm, 8x8mm oder 10x10 mm, wobei der Spulendurchmesser und damit auch der Ferritkern im Bereich von 1...2mm zu liegen kommt. Der Abstand der Planarspulen vom Druckkörper beträgt vorteilhaft zwischen 0.1 und 3 mm, eine Änderung um 1 mm weg vom Druckkörper ergibt einen Signalverlust von etwa 20%. Der Druckkörper selber kann bei bevorzugten Ausgestaltungen einen Durchmesser von minimal 5mm bis maximal 20mm haben.

Eine bevorzugte Ausgestaltung betrifft einen Drucksensor, der Druck relativ zum Umgebungsdruck misst. Vorteilhaft ist hier die Verwendung einer eher dicken Membrane im Bereich des Grundkörpers, die kaum eine Auslenkung erfährt. Statt beispielsweise 0.2 ... 0.5 mm bei Drücken zwischen 100 und 600bar kann eine 1 mm Membrandicke gewählt werden und die Überdruckfestigkeit wird statt einem Faktor 2-3 bei bis zu einem Faktor 6 bei Drücken bis zu 400bar und einem Faktor 10 bei Drücken bis zu 100 bar liegen.

Unter der Überdruckfestigkeit wird das Verhältnis von maximalen Überdruck zu gewähltem Messbereich verstanden, der am Sensor anliegen kann, ohne dass der Sensor Schaden nimmt. Ebenso vorteilhaft können verschiedene Materialien eingesetzt werden.

Eine weitere bevorzugte Ausgestaltung betrifft einen Absolutdrucksensor, der in der druckabgewandten Seite entsprechend verkapselt ist, so dass der Sensor gegenüber Vakuum oder "sealed-gage" (ein entsprechend eingestelltes Referenzvolumen) misst. Dank dem berührungslosen Verfahren kann der Sensor nun durch eine beispielsweise aus Aluminiumoxyd-Keramik (Al₂O₃) gebildete Abdeckplatte hindurch messen. Vorzugsweise wird die Abdeckplatte auf die Membrane mit einer niedrig schmelzenden (z.B. 350°C) Glasfritte aufgebracht.

Ein Differenzdrucksensor kann ebenso realisiert werden, wobei statt einer Platte auch eine doppelt-profilierte Membran verwendet werden kann, bei der vorteilhafterweise über Radien zwischen 0.2 und 0.6mm die innen liegenden Zugspannungen abgebaut werden können.

Ausführungsbeispiele der Erfindung werden im Folgenden anhand der beigefügten Zeichnungen näher erläutert. Darin zeigt:
- Fig. 1: eine schematische Schnittdarstellung einer ersten Ausführungsform eines Drucksensors, der eine erste durch einen zu messenden Druck zu beaufschlagende Membran und eine erste magnetoelastische Spannungserfassungseinrichtung zur Erfassung von Spannungen in der ersten Membran aufweist, in einer Ausführung als Absolutdrucksensor;
- Fig. 2: eine schematische Seitenansicht der ersten magnetoelastischen Spannungserfassungseinrichtung;
- Fig. 3: eine schematische Darstellung in Draufsicht von dem Zentrum der Fig. 1 von innen nach links auf die erste Membran gesehen, so dass die erste Membran und die magnetoelastischen Spannungserfassungseinrichtung dargestellt sind;
- Fig. 4: eine schematische Schnittdarstellung einer zweiten Ausführungsform eines Drucksensors, der eine erste durch einen zu messenden Druck zu beaufschlagende Membran und eine erste magnetoelastische Spannungserfassungseinrichtung zur Erfassung von Spannungen in der ersten Membran aufweist, in einer weiteren Ausführung als Absolutdrucksensor mit einer Referenzplatte;
- Fig. 5: eine schematische Schnittdarstellung einer dritten Ausführungsform eines Drucksensors, der eine erste durch einen zu messenden Druck zu beaufschlagende Membran und eine erste magnetoelastische Spannungserfassungseinrichtung zur Erfassung von Spannungen in der ersten Membran aufweist, in einer Ausführung als Differenzdrucksensor;
- Fig. 6: eine schematische Schnittdarstellung einer bei einem der Ausgestaltungen der Fig. 1 bis 5 verwendbaren ersten Membran, die integraler Bestandteil eines Druckkörpers ist, wobei Zonen der durch die erste magnetoelastische Spannungserfassungseinrichtung zu erfassenden Spannungen dargestellt sind;
- Fig. 7: eine schematische Schnittdarstellung einer vierten Ausgestaltung des Drucksensors mit einer integral an einem Druckkörper ausgebildeten ersten Membran, einer ersten magnetoelastischen Spannungserfassungseinrichtung, einer zweiten Membran und einer zweiten magnetoelastischen Spannungserfassungseinrichtung;
- Fig. 8: eine schematische Schnittdarstellung eines mit einer integrierten Membran versehenen Druckkörpers nach dem Stand der Technik bei einem bekannten Drucksensor gemäß einem der Dokumente D1 bis D6;
- Fig. 9: eine schematische Schnittdarstellung des Druckkörpers für einen Drucksensor gemäß einer Ausgestaltung der Erfindung, im Vergleich zu dem bekannten Druckkörper von Fig. 8;
- Fig. 10: eine schematische Schnittdarstellung vergleichbar der Figuren 8 und 9 eines weiteren Druckkörpers zur praktischen Realisierung der Ausführungsvariante der Fig. 4 mit Membran und Referenzplatte;
- Fig. 11: einen schematischen Schaltplan für die Schaltung von Spulen der magnetoelastischen Spannungserfassungseinrichtung.

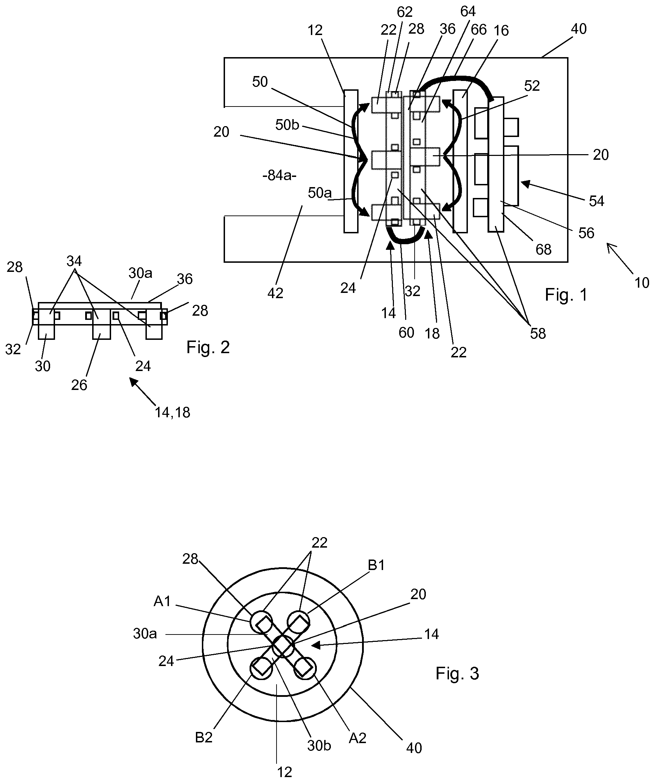

In den Figuren 1, 4, 5 und 7 sind unterschiedliche Ausführungsformen eines Drucksensors 10 dargestellt, der wenigstens eine durch einen Druck zu beaufschlagende Membran, hier in Form einer ersten Membran 12, und eine magnetoelastische Spannungserfassungseinrichtung, hier in Form einer ersten magnetoelastischen Spannungserfassungseinrichtung 14, zum magnetoelastischen Erfassen einer durch die Druckbeaufschlagung bedingten mechanischen Spannung aufweist. Bei den dargestellten Ausgestaltungen ist eine magnetoelastische Spannungserfassungseinrichtung vorgesehen, die mit einer aktiven Aufmagnetisierung arbeitet.

Bei den dargestellten Ausführungsformen ist die mit Druck zu beaufschlagende Membran eine erste Membran, wobei durch die Druckbeaufschlagung der ersten Membran verursachte mechanische Spannungen durch eine erste magnetoelastische Spannungserfassungseinrichtung 14 erfasst werden. Weiter ist eine zweite Membran 16 vorgesehen, wobei eine zweite magnetoelastische Spannungserfassungseinrichtung 18 der zweiten Membran 16 in analoger Weise zugeordnet ist, wie die erste magnetoelastische Spannungserfassungseinrichtung 14 der ersten Membran 12 zugeordnet ist.

Bei den dargestellten Ausführungsformen ist die wenigstens eine Membran 12, 16 zumindest teilweise aus einem ferromagnetischen Material gebildet und die entsprechend zugeordnete magnetoelastische Spannungserfassungseinrichtung 14, 18 ist dazu ausgebildet, mechanische Spannungen in der zugeordneten Membran 12, 16 magnetoelastisch zu erfassen.

Die erste und die zweite magnetoelastische Spannungserfassungseinrichtungen 14, 18 sind analog aufgebaut, wobei deren gemeinsamer Aufbau im Folgenden nur anhand der ersten magnetoelastischen Spannungserfassungseinrichtung 14 anhand Fig. 2 und Fig. 3 näher erläutert wird.

Die magnetoelastische Spannungserfassungseinrichtung 14, 18 weist wenigstens eine Magnetfelderzeugungseinrichtung 20 zum Erzeugen eines durch den Bereich, an dem Spannungen zu erfassen sind, laufenden Magnetfeldflusses auf. Weiter weist die magnetoelastische Spannungserfassungseinrichtung 14, 18 eine Magnetfeldflusserfassungseinrichtung 22 zum Erfassen eines Magnetfeldflusses in dem Bereich auf, an dem mechanische Spannungen zu erfassen sind.

Mechanische Spannungsänderungen an einer insbesondere aus einem weichmagnetischen Material gebildeten Oberfläche eines Körpers führen aufgrund des magnetoelastischen Effekts zu Permeabilitätsänderungen und so zu Änderungen eines in die Oberfläche induzierten Magnetfeldflusses. Dieser Effekt wird bei den dargestellten Drucksensoren ausgenutzt, um Spannungen in der durch Druck beaufschlagten Membran unmittelbar zu erfassen. Diese Spannungen sind ein Maß für den auf die Membran wirkenden Druck.

Demnach ist die Magnetfelderzeugungseinrichtung 20 dazu ausgebildet, einen Magnetfluss zu erzeugen, der durch den Bereich der zugeordneten Membran 12, 16, an dem Spannungen zu erfassen sind, fließt und die Magnetfeldflusserfassungseinrichtung 22 ist dazu ausgebildet, durch mechanische Spannungen verursachte Änderungen an dem Magnetfeldfluss, wie insbesondere Richtungsänderungen der Magnetflusslinien, zu erfassen.

Die Magnetfelderzeugungseinrichtung 20 weist wenigstens eine Erregerspule 24 und einen Erregerspulenkern 26 auf. Die Magnetfeldflusserfassungseinrichtung 22 weist wenigstens eine Messspule 28 und einen Messspulenkern 30 auf.

Eine einfachere, hier nicht näher dargestellte Ausgestaltung der magnetoelastischen Spannungserfassungseinrichtung weist zwei in einem Winkel (vorzugsweise 70°-110°, vorzugsweise 90°) kreuzend zueinander angeordnete magnetisch isolierte Joche auf, von denen eine die Erregerspule und das andere die Messspule trägt. Bei der dargestellten bevorzugten Ausgestaltung der magnetoelastischen Spannungserfassungseinrichtung 14, 18 sind vier Joche zu einer in Draufsicht x-förmigen Form verschmolzen, wobei in einem zentralen Bereich der Erregerspulenkern 26 mit der Erregerspule 24 vorgesehen ist und Polarme der Joche einen ersten bis vierten Messspulenkern 30 mit einer ersten bis vierten Messspule 28, A1, A2, B1, B2 bilden. Derartige Messköpfe zum Induzieren eines Magnetfeldflusses und zum Messen von Magnetfeldflussänderungen sind auf dem Gebiet von Drehmomentsensoren zum Messen von Drehmomenten an Wellen vom Prinzip her bekannt, siehe z.B. die WO2016119931A1, die WO2016198658A1 und die EP3064919A1 sowie US 2912642 A und EP 0 046 417 A1.

Bei der dargestellten Ausgestaltung der magnetoelastischen Spannungserfassungseinrichtungen 14, 18 sind die Erregerspulenkerne 26, die Messspulenkerne 30 und die Joche als Ferritkerne 34 und Ferritschicht 36 ausgebildet, wobei die Erregerspule 24 und die Messspulen 28, A1, A2, B1, B2 als Planarspulen 32 in Leiterplattentechnik ausgebildet sind. Hierzu sind spiralförmige Leiterbahnen auf einzelnen Leiterplattenebenen durch Mehrfachschichten von derartigen Leiterplattenebenen und Durchgangskontaktierungen zu der jeweiligen Spule verschaltet, wobei im Zentrum der jeweilige Ferritkern 34 verläuft. Für weitere Einzelheiten zu dem Aufbau der magnetoelastischen Spannungserfassungseinrichtung 14, 18 wird auf die nicht-vorveröffentlichte deutsche Patentanmeldung 10 2016 122 172.4 verwiesen.

Fig. 3 zeigt die erste Membran 12 zusammen mit der ersten magnetoelastischen Spannungserfassungseinrichtung 14 in x-förmiger Ausführung mit zentraler Erregerspule 24 und äußeren Messspulen 28, A1, A2, B1, B2. Die Membran 12 ist aus einem Stahlmaterial gefertigt. Besonders geeignet sind 1.4542-Stähle, 1.4435-Stähle, korrosionsfeste Stähle, Duplexstähle, z.B. 1.4462.

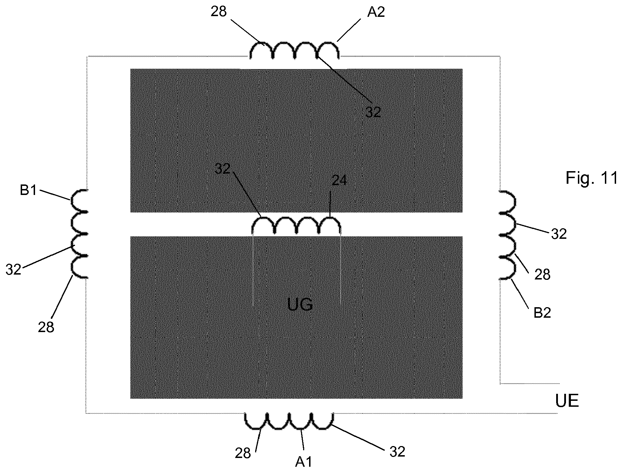

Fig. 11 zeigt einen beispielhaften Schaltplan zur Verschaltung der Spulen 28, 24. Gemäß diesem Beispiel können die Messspulen in Reihe geschaltet werden, so dass sich ein Messsignal durch Addition der von A1+A2+B1+B2 ergibt. Ein solches Signal zeigt die Summe des mechanischen Stresses an.

Fig. 1 zeigt ein erstes Ausführungsbeispiel für einen Drucksensor 10 in Form eines Absolutdrucksensors. Die erste Membran 12 ist eine Messmembran, die in einem Gehäuse 40 untergebracht ist und über einen ersten Druckkanal 42 mit zu messenden Druck beaufschlagt wird. Bei einer nicht dargestellten Abwandlung ist die erste Membran 12 frontbündig an dem Gehäuse angebracht, so dass kein Druckkanal durch das Gehäuse führt, sondern die erste Membran 12 unmittelbar mit Druck beaufschlagt wird.

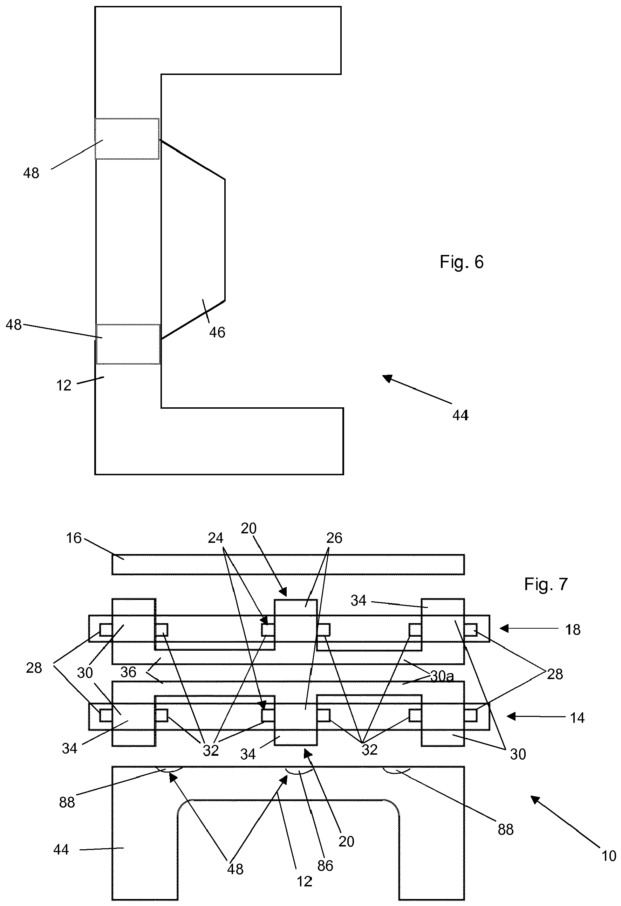

In dem Gehäuse 40 ist die erste magnetoelastische Spannungserfassungseinrichtung 14 so angeordnet, dass die Messspulen 28 nahe denjenigen Oberflächen der ersten Membran 12 angeordnet sind, die bei Druckbeaufschlagung besonders mechanisch belastet werden. Zum Beispiel ist die erste Membran 12, wie dies in Fig. 6 gezeigt ist, als integraler Bestandteil eines topfförmigen Druckkörpers 44 ausgebildet und mittig mit einem verdickten Bereich 46 versehen, so dass sich mechanische Spannungen an dem Übergang zu dem verdickten Bereich konzentrieren. In Fig. 6 sind die mechanisch belasteten Bereiche, an denen die Spannung magnetoelastisch erfasst wird, mit den Bezugszeichen 48 versehen.

Wie in Fig. 1 dargestellt, erzeugt die Magnetfelderzeugungseinrichtung 20 einen magnetischen Fluss 50 durch diese Bereiche 48, die durch Druckbeaufschlagung mechanisch belastet werden. Insbesondere werden durch die Spannungen Permeabilitätsänderungen in den Oberflächen erzeugt, die zu Änderungen in dem Magnetfluss führen, welche durch die Magnetfeldflusserfassungseinrichtung 22 erfasst werden, in dem die Summe aus den Messspulen A1, A2, B1, B2 gebildet wird.

Wie weiter der Fig. 1, auf die nun wieder Bezug genommen wird, zu entnehmen weist der Drucksensor 10 im Inneren des Gehäuses 40 die zweite Membran 16 auf, die als Referenzmembran dient. Diese Membran 16 ist vorzugsweise analog aufgebaut wie die erste Membran 12, insbesondere aus dem gleichen Material und mit den gleichen Abmessungen. Die zweite Spannungserfassungseinrichtung 18 misst Spannungen an der zweiten Membran 16 in gleicher Weise, wie die erste Spannungserfassungseinrichtung 14 Spannungen an der ersten Membran 12 erfasst. Demnach erzeugt die Magnetfelderzeugungseinrichtung 20 der zweiten Spannungserzeugungseinrichtung 18 einen weiteren magnetischen Fluss 52 in der als Referenzmembran vorgesehenen zweiten Membran 16; und Änderungen an dem Magnetfluss werden durch die Magnetfelderfassungseinrichtung 22 der zweiten Spannungserzeugungseinrichtung 18 erfasst.

Wie gezeigt, kann der Aufbau aus zweiter Membran 16 und zweiter Spannungserfassungseinrichtung 18 spiegelbildlich zu dem Aufbau aus erster Membran 12 und erster Spannungserfassungseinrichtung 14 sein. Die Spannungserfassungseinrichtungen 14, 18 können auch zu einem Bauteil mit gemeinsamer Ferritschicht 36 zusammengefasst sein.

Die Magnetfelderfassungseinrichtungen 22 der ersten und der zweiten Spannungserfassungseinrichtung 14, 18 werden so miteinander verschaltet, dass ein Differenzsignal gebildet wird, welches ein Signal für den Druck auf der ersten Membran 12 bildet.

Weiter ist eine Auswerteeinrichtung 54 vorgesehen, die hier durch eine bestückte Elektronik 56 gebildet ist, die ebenfalls in dem Gehäuse 40 untergebracht sein kann. Das Signal aus den Magnetfelderfassungseinrichtung 22 der zweiten Spannungserfassungseinrichtung 18 wird von dem Signal der Magnetfelderfassungseinrichtung 22 der ersten Spannungserfassungseinrichtung 14 abgezogen. Dieses Differenzsignal wird durch die Auswerteeinrichtung 54 ausgewertet und darauf basierend ein entsprechendes Drucksignal als Signal für den Absolutdruck ausgegeben.

Die Fig. 1 zeigt eine fertigungstechnisch besonders bevorzugte Ausgestaltung, bei der die bestückte Elektronik 56 sowie die Planarspulen 32 der zweiten Spannungserfassungseinrichtung 18 und die Planarspulen der ersten Spannungserfassungseinrichtung gemeinsam auf einer Leiterplatte 58 mit den entsprechenden Anschlussleitungen aus Leiterbahnen hergestellt werden, wobei ein semiflexes oder starrflexes erstes Verbindungsstück 60 zwischen einem ersten Platinenbereich 62, auf oder in dem die Planarspulen 32 der ersten Spannungserfassungseinrichtung 14 gebildet sind, und einem zweiten Platinenbereich 64, auf oder on dem die Planarspulen 32 der zweiten Spannungserfassungseinrichtung 18 gebildet sind, ausgebildet wird, und ein semiflexes oder starrflexes zweites Verbindungsstück 66 zwischen dem zweiten Platinenbereich 64 und einem dritten Platinenbereich 68, der die Elektronik 56 bildet, ausgebildet wird. In anderen Ausgestaltungen werden nur zwei der Platinenbereiche 62, 64, 68 gemeinsam hergestellt bzw. sind nur zwei dieser Platinenbereiche 62, 64, 68 durch ein vorzugsweise semiflexes oder starrflexes Verbindungsstück 60, 66 verbunden.

Im Folgenden wird die Funktion des Drucksensors 10 von Fig. 1 näher erläutert.

Für die Messung von Druck ist Stand der Technik (siehe D1 bis D6), dass die Veränderung einer Membran durch Dehnmessstreifen (DMS) gemessen wird. Die Herstellung der DMS-Zelle ist relativ aufwändig und mit ein Kostentreiber für die Herstellkosten.

Bei dem Drucksensor 10 nach Fig. 1 wird nicht die Auslenkung einer Membran, sondern vielmehr eine mechanische Spannung in der Membran 12 mittels einer magnetoelastischen Spannungserfassungseinrichtung 14, die mit einer aktiven Aufmagnetisierung arbeitet, erfasst. Damit kann der entstehende mechanische Stress, der aufgrund einer Druckänderung entsteht gemessen werden - die Messung des mechanischen Stresses ist deutlich sensitiver als die Messung mit DMS. Zusätzlich ist keine mikromechanische Bearbeitung der Membran notwendig. Durch einen entsprechenden Aufbau kann eine Differenzmessung realisiert werden, die dazu verwendet werden kann, um den Drucksensor 10 im Feld zu rekalibrieren.

Der Drucksensor 10 hat eine Sensormembran mit einer Sensoranordnung für die Stressmessung an einer planaren Fläche der Membran 12. Die Spannungerfassungseinrichtung 14 kann wie bei magnetoelastischen Drehmomentsensoren mit 4 Messspulen realisiert werden oder durch X-Spulen angeordnet um die Generatorspule.

Die in Fig. 1 dargestellte Seitenansicht zeigt den Sensoraufbau mit Referenzplatte für differentielle Messung. Die beiden Spulenpaare für die Messmembran - erste Membran 12 - und für die Referenzmembran - zweite Membran 16 - können als Planarspulen 32 ausgelegt werden und in einem Panel hergestellt werden - dadurch sind kleine Fertigungstoleranzen möglich. Der Ferrit in der Mitte kann aus einem Bauteil oder zwei Bauteilen ausgelegt werden. Bei nicht dargestellten Ausführungsformen kann, wenn die Signalausbeute ausreicht, ganz auf einen Ferrit verzichtet werden und die Spulenanordnung aus einer Planarspule hergestellt werden. Die Generatorspulen - Erregerspulen 24 - für die Messmembran 12 und für die Referenzmembran 16 können in Serie geschaltet werden und mit einer Quelle getrieben werden.

Die Verwendung von Planarspulen 32 anstatt gewickelter Spulen bringt wesentliche Fertigungsvorteile. Die Planarspulen 32 können zweidimensional hergestellt werden und dann durch entsprechende Fertigungstechniken dreidimensional verarbeitet werden. Insbesondere erfolgt die Herstellung in Leiterplattentechnik.

Durch die Anordnung mit einer Messmembran - erste Membran 12 - und einer Referenzmembran - zweite Membran 16 - kann eine differentielle Messung durchgeführt werden.

Drifts in der Erregerspule 24 durch Alterung oder Temperatur können so minimiert werden.

Durch diese Messmethode kann deutlich sensitiver gemessen werden als mit direkten DMS auf einer Membran - dadurch können dickere Membrane verwendet werden und größere Überdruckfestigkeiten erreicht werden.

Das Messsignal entsteht im Wesentlichen durch den Stress im Metall welcher zu einer Änderung der Permeabilität führt.

Die Technologie kann auch für flache Membrane, insbesondere für frontbündige Membrane eingesetzt werden.

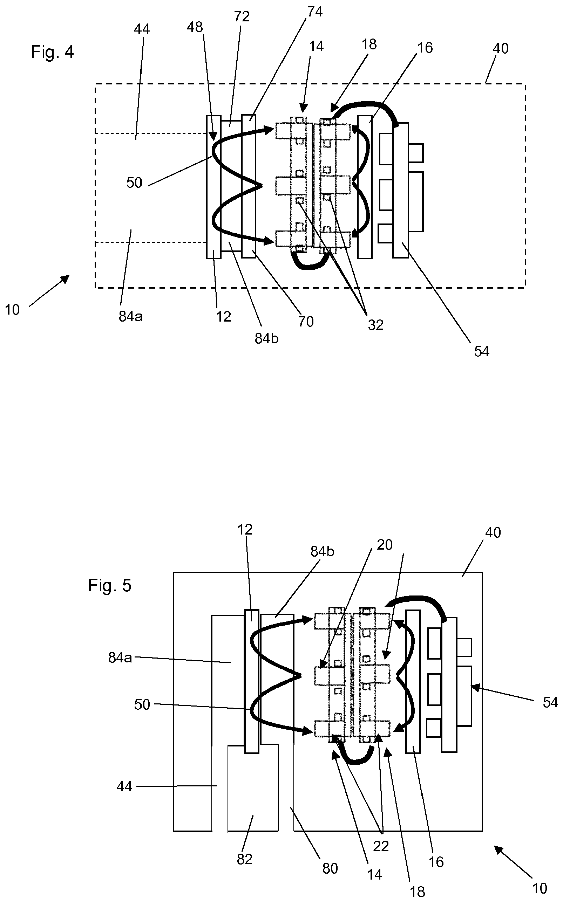

Fig. 4 zeigt eine weitere Ausgestaltung des Drucksensors 10, die bis auf die folgenden Unterschiede gleich zu der Ausgestaltung des Drucksensors 10 in der Ausführung von Fig. 1 ist. Dabei tragen entsprechende Teile die gleichen Bezugszeichen und deren Beschreibung wird hier nicht wiederholt, sondern es wird auf die obigen Ausführungen verwiesen.

Auch die Fig. 4 zeigt einen Drucksensor 10 in einer Ausgestaltung als Absolutdrucksensor zum Messen eines absoluten Drucks. Durch die Möglichkeit, mit Magnetfeldern durch Materie hindurch zu messen, kann ein Absolutdrucksensor aufgebaut werden, der unmittelbar gegenüber einem Referenzvolumen misst.

Während die Ausgestaltung nach Fig. 1 einen Druck gegenüber dem Umgebungsdruck misst oder dadurch als Absolutdrucksensor ausgebildet werden kann, dass die zweite Membran 16 ein Referenzvolumen mit definiertem Druck (z.B. Vakuum) abschließt, ist bei der Ausgestaltung der Fig. 4 ein Referenzvolumen (z.B. mit Vakuum) unmittelbar angrenzend an die erste Membran 12 vorgesehen.

Hierzu ist zwischen der ersten Membran 12 und der ersten Spannungserfassungseinrichtung 14 eine Wandung 70 aus einem nichtferromagnetischen Material (z.B. Keramik oder Duplexstahl) derart vorgesehen, dass zwischen der ersten Membran 12 und der Wandung 70 ein hermetisch dichtes Referenzvolumen 72 für eine Absolutdruckmessung (insbesondere evakuiert - Vakuum) gebildet ist.

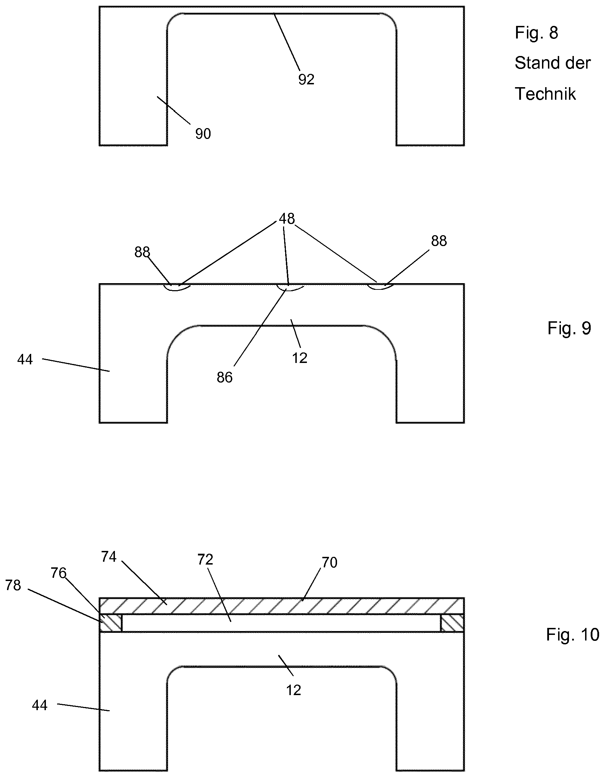

Ein praktisches Ausführungsbeispiel für die erste Membran 12 mit der Wandung 70 ist in Fig. 10 dargestellt. Hier ist die erste Membran 12, wie zuvor anhand der Fig. 1 und 6 erläutert, integraler Bestandteil des Druckkörpers 44. Der Druckkörper 44 ist für die magnetoelastische Erfassung von Oberflächenspannungen aus einem geeigneten ferromagnetischen Material, siehe oben aufgeführt, gebildet und mit einer Verkapselung durch eine Keramikplatte 74 als Wandung und einer Fügestelle 76 versehen.

Hierdurch lässt sich bei Einbindung in den Aufbau, wie er in Bezug auf Fig. 1 beschrieben worden ist, ein Absolutdrucksensor schaffen, der in der druckabgewandten Seite entsprechend verkapselt ist, so dass der Drucksensor 10 gegenüber Vakuum oder "sealed-gage" (ein entsprechend eingestelltes Referenzvolumen 72) misst. Dank dem berührungslosen Verfahren kann der Drucksensor 10 nun durch eine beispielsweise aus Aluminiumoxyd-Keramik (Al2O3) gebildete Abdeckplatte 74 hindurch messen. Vorzugsweise wird die Abdeckplatte 74 auf die Membrane mit einer niedrig schmelzenden (z.B. 350°C) Glasfritte 78 aufgebracht.

Fig. 5 zeigt eine weitere Ausgestaltung des Drucksensors 10, in einer Ausführung als Differenzdrucksensor. Auch hier ist der Grundaufbau vergleichbar zu der Ausgestaltung nach Fig. 1, wobei gleiche Teile gleich Bezugszeichen tragen und hier nicht erneut beschrieben werden.

Anstelle nur eines ersten Druckkanals 42, mit der die erste Membran 12 nur mit einem zu messenden Druck beaufschlagt wird, weist der Drucksensor 10 in der Ausgestaltung der Fig. 5 den ersten Druckkanal 42, mit dem die erste Membran mit einem ersten Druck auf einer ersten Seite beaufschlagbar ist, und einen zweiten Druckkanal 80 auf, mit der die erste Membran 12 auf ihrer zweiten Seite mit einem zweiten Druck beaufschlagbar ist.

Dementsprechend wird die erste Membran 12 bei Auftreten eines Differenzdruckes zwischen dem ersten Druck und dem zweiten Druck mechanisch belastet, wobei die entsprechenden Spannungen analog wie für die erste Ausführungsform beschrieben erfasst werden.

Anstelle der in Fig. 5 dargestellten Ausgestaltung kann bei einer Abwandlung der Ausführung von Fig. 1 auch dadurch ein Differenzdrucksensor erreicht werden, in dem die erste Membran 12 mit dem ersten Druck und die zweite Membran 16 mit dem zweiten Druck beaufschlagt wird. Bei dieser Abwandlung mündet der zweite Druckkanal 80 in eine durch die zweite Membran 16 begrenzte Messkammer. Aufgrund der Möglichkeit einer differentiellen Messung gegenüber einer Referenzmembran ist allerdings die Ausgestaltung nach Fig. 5 als Ausführung für den Differenzdrucksensor bevorzugt.

Im Folgenden wird die Funktion der Ausgestaltung nach Fig. 5 näher erläutert.

Bei bekannten Differenzdrucksensoren, die auf Basis einer Messung einer Auslenkung der Membran funktionieren, besteht immer die Herausforderung die sensitiven Strukturen auf einer Membran aufzubringen und einen elektrischen Anschluss dieser Strukturen zu realisieren. Diese Tatsache macht einen Differenzdrucksensor mit einer Stahlmembran relativ teuer im Aufbau.

Durch die magnetoelastische Spannungserfassungseinrichtung 14, die vorzugsweise mit einer aktiven Aufmagnetisierung arbeitet, kann kontaktlos Stress in einer Stahlmembran gemessen werden. Durch einen geeigneten Aufbau kann ein sehr kleines System realisiert werden - welches auch für sehr hohe Temperaturen und sehr hohe Überdrücke (Berstdrücke) ausgelegt werden kann.

Die Verwendung von Planarspulen 32 anstatt gewickelter Spulen ist für eine kostengünstige Fertigung sehr vorteilhaft. Die Planarspulen 32 können zweidimensional hergestellt werden und dann durch entsprechende Fertigungstechniken dreidimensional verarbeitet werden.

Die Messmembran - erste Membran 12 - kann aus Stahl bestehen. Die Messmembran - erste Membran 12 kann insbesondere auf einen Träger 82 geschweisst werden oder mit einem Träger umspritzt werden. Auch eine einstückige Fertigung der Membran 12 mit Träger 82 ist möglich, analog zu dem Druckkörper 44.

Über die Dicke der ersten Membran 12 kann der Messbereich und der Überdruckbereich definiert werden.

Die Messspulen 28 können durch den Träger 82 oder das Gehäuse 40 durchmessen, wenn dieses aus diamagnetischen oder paramagnetischem Material besteht.

Das Messsignal ist der mechanische Stress in der Membran 12, der zu einer Veränderung der Permeabilität führt.

Der Drucksensor 10 kann auf sehr hohe Absolutdrücke ausgelegt werden durch die Verwendung eines Stahlgehäuses oder sehr kostengünstig hergestellt werden wenn die Stahlmembran umspritzt wird.

Je nach Aufbau und Dimension kann für das Sensorelement auf einen magnetischen Flussleiter verzichtet werden, d.h. dann ist kein Ferrit im Spulenaufbau nötig.

Die Spulen 24, 28 können mit Planartechnologie in einem Fertigungsbatch hergestellt werden und unterliegen so relativ kleinen Fertigungstoleranzen.

Die Erregerspulen 24 für die Messmembran - erste Membran 12 - und die für die Referenzmembran - zweite Membran 16 - können in Serie geschaltet werden, Alterungsfaktoren zu kompensieren.

Alterungseinflüsse und Temperatureinflüsse auf den Mess - bzw. Anregerkreis können durch die differentielle Messung eliminiert werden.

Fig. 7 zeigt eine Prinzipanordnung des magnetoelastischen Drucksensors 10 mit Ferritkern 34, 36, den Planarspulen 32 eingebettet im Printed Circuit Board - Platinenbereiche 62, 64 gegenüber dem ferromagnetischen Messkörper - Druckkörper 44, der integral mit der Messmembran - erste Membran 12 - versehen ist. Bei Druckbeaufschlagung auf die erste Membran treten Zugspannungen 86 und Druckspannungen 88 an der Oberfläche auf.

Diese Oberflächenspannungen 86, 88 werden durch die erste Spannungserfassungseinrichtung 14 differentiell gegenüber der zweiten Spannungserfassungseinrichtung 18, die entsprechend mit der Referenzmembran - zweite Membran 16 - gekoppelt ist, erfasst. Gerade Oberflächenspannungen lassen sich mit dem magnetoelastischen Effekt besonders gut messen.

In den Fig. 8, 9 und 10 sind ein herkömmlicher Druckverformungskörper 90 aus einem herkömmlichen Drucksensor nach dem Stand der Technik und zwei Ausführungsformen von Druckkörpern 44 für erfindungsgemäße Drucksensoren 10 gegenübergestellt. Da bei herkömmlichen Drucksensoren eine Auslenkung der Membran erfasst wird, muss die Membran dazu ausgelegt, sein, auch bei entsprechend kleinen zu messenden Drücken eine erfassbare Auslenkung durchzuführen. Demnach muss bei vergleichbaren Drücken die Membran 92 des herkömmlichen Druckverformungskörpers sehr dünn sein.

Fig. 9 zeigt den Druckkörper 44 für den gleichen Druck zum Einsatz bei einem nach dem erfindungsgemäßen Prinzip arbeitenden Drucksensor 10. Da in erster Linie nicht Auslenkungen, sondern Spannungen erfasst werden, kann die Membran 12 für die magnetoelastische Erfassung von Druck-Zug-Oberflächenspannungen 86, 88 viel dicker ausgeführt werden. Auf der Unterseite entstehen entsprechend komplementäre Zug-Druck-Spannungen 88, 86. Der Bereich von neutralen Nullspannungen im Druckkörper 44 ist angedeutet mit 94

Die Erfindung betrifft die Messung von Druck mittels wenigstens einer gesonderten Membran 12. Im Gegensatz zu Druckmessungen, bei denen Auslenkungen an Rohrgehäusen oder dergleichen Druckbehältnissen unmittelbar gemessen werden, lassen sich mit einer speziell vorgesehenen gesonderten Membran Drücke exakter vorbestimmt messen. Die Membran kann auf die zu messenden Drücke so definiert vorgefertigt werden, dass definierte Spannungsbereiche entstehen und aufgrund des Auftretens von Spannungen exakt auf herrschende Drücke geschlossen werden kann. Insbesondere ist die Fläche einer Membran genau vordefiniert, und die Membran kann hinsichtlich eines vorteilhaften Verformungsverhaltens optimiert werden.

Die obigen Ausführungsformen zeigen die bevorzugte Messung von mechanischen Spannungen unmittelbar an der Membran 12. Bei Abwandlungen kann aber auch ein Element wie insbesondere ein Kraftmessbalken an die Membran 12 gekoppelt sein, so dass Spannungen an der Membran zu Spannungen in dem Element führen, die dann magnetoelastisch erfasst werden.

### Bezugszeichenliste:

- 10: Drucksensor
- 12: erste Membran
- 14: erste magnetoelastische Spannungserfassungseinrichtung
- 16: zweite Membran
- 18: zweite magnetoelastische Spannungserfassungseinrichtung
- 20: Magnetfelderzeugungseinrichtung
- 22: Magnetfeldflusserfassungseinrichtung
- 24: Erregerspule
- 26: Erregerspulenkern
- 28: Messspule
- 30: Messspulenkern
- 30a: erste Jochverbindung
- 30b: zweite Jochverbindung
- 32: Planarspule
- 34: Ferritkern
- 36: Ferritschicht
- 40: Gehäuse
- 42: erster Druckkanal
- 44: Druckkörper
- 46: verdickter Bereich
- 48: Bereich, an dem Spannung zu erfassen ist
- 50: magnetischer Fluss
- 50a: erster Magnetfeldfluss
- 50b: zweiter Magnetfeldfluss
- 52: zweiter magnetischer Fluss
- 54: Auswerteeinrichtung
- 56: Elektronik
- 58: Leiterplatte
- 60: erstes Verbindungsstück
- 62: erster Platinenbereich (erste Spannungserfassungseinrichtung)
- 64: zweiter Platinenbereich (zweite Spannungserfassungseinrichtung)
- 66: zweites Verbindungsstück
- 68: dritter Platinenbereich (Elektronik 56)
- 70: Wandung
- 72: Referenzvolumen
- 74: Abdeckplatte, z.B. aus Keramik
- 76: Fügestelle
- 78: Glasfritte
- 80: zweiter Druckkanal
- 82: Träger
- 84a: erste Druckkammer
- 84b: zweite Druckkammer
- 86: Zugspannung
- 88: Druckspannung
- 90: herkömmlicher Druckverformungskörper
- 92: Membran (Stand der Technik)
- A1: erste Messspule
- A2: zweite Messspule
- B1: dritte Messspule
- B2: vierte Messspule
- UE: Spannung der Messspulen (Messsignal)
- UG: Speisespannung für die Erregerspule (insbesondere hochfrequent, Bereich: MHz)

## Patentansprüche

1. Drucksensor (10), mit wenigstens einer durch einen zu messenden Druck zu beaufschlagenden Membran (12) und einer magnetoelastischen Spannungserfassungseinrichtung (14) zum magnetoelastischen Erfassen einer durch die Druckbeaufschlagung bedingten mechanischen Spannung.

2. Drucksensor (10) nach Anspruch 1,
**dadurch gekennzeichnet,**
**dass** die wenigstens eine Membran (12) zumindest teilweise aus einem ferromagnetischen Material gebildet ist und dass die magnetoelastische Spannungserfassungseinrichtung (14) zum magnetoelastischen Erfassen einer mechanischen Spannung in der Membran (12) ausgebildet ist.

3. Drucksensor (10) nach einem der voranstehenden Ansprüche, **gekennzeichnet durch** eines, mehrere oder alle der folgenden Merkmale:
3.1 dass die magnetoelastische Spannungserfassungseinrichtung (14) mit einer aktiven Aufmagnetisierung arbeitet;
3.2 dass die magnetoelastische Spannungserfassungseinrichtung (14) zum Erfassen einer Richtung oder Richtungsänderung von Magnetfeldlinien eines in die Membran (12) oder in eine an die Membran (12) gekoppelten Element induzierten Magnetfelds ausgebildet ist, um aus der erfassten Richtung oder Richtungsänderung eine mechanische Spannung in der Membran (12) bzw. dem mit der Membran (12) gekoppelten Element zu erfassen;
3.3 dass die magnetoelastische Spannungserfassungseinrichtung (14) wenigstens eine Magnetfelderzeugungseinrichtung (20) zum Erzeugen eines **durch** einen aufgrund des zu messenden Drucks mechanisch belasteten Bereich (48) laufenden Magnetfeldflusses (50) und eine Magnetfeldflusserfassungseinrichtung (22) zum Erfassen eines Magnetfeldflusses in dem mechanisch belasteten Bereich (48) aufweist;
3.4 dass die Magnetfelderzeugungseinrichtung (20) wenigstens eine Erregerspule (24) sowie einen Erregerspulenkern (26) aufweist und dass die Magnetfeldflusserfassungseinrichtung (22) wenigstens eine Messspule (28) und einen Messspulenkern (30) aufweist;
3.5 dass die Magnetfelderfassungseinrichtung (22) mehrere Messspulen (28, A1, A2, B1, B2) aufweist, vorzugsweise derart, dass sie auf unterschiedliche Magnetfeldflusslinien-Richtungen sensitiv sind.

4. Drucksensor (10) nach einem der voranstehenden Ansprüche,
**dadurch gekennzeichnet,**
**dass** die magnetoelastische Spannungserfassungseinrichtung (14) eine Erregerspule (24) und ein Erregermagnetjoch zum Erzeugen eines Magnetfeldflusses (50) in einem durch einen zu messenden Druck mechanisch belasteten Bereich (48), insbesondere der Membran (12), aufweist und eine Messspule (28) und ein Messmagnetjoch zum Messen eines Magnetfeldflusses in dem durch den zu messenden Druck mechanisch belasteten Bereich (48) aufweist, wobei das Erregermagnetjoch und das Messmagnetjoch einen Winkel zwischen 5° und 175° zueinander bilden.

5. Drucksensor (10) nach einem der voranstehenden Ansprüche,
**dadurch gekennzeichnet,**
**dass** die magnetoelastische Spannungserfassungseinrichtung (14) eine zentrale Erregerspule (24) sowie eine erste Messspule (A1), die durch eine erste Jochverbindung (30a) mit der Erregerspule (24) zum Erzeugen und Messen eines ersten Magnetfeldflusses (50a), der durch einen bei zu messenden Druck mechanisch belasteten Bereich (48), insbesondere der Membran (12), verläuft, verbunden ist, und eine zweite Messspule (B1) aufweist, die durch eine zweite Jochverbindung (30b) mit der Erregerspule (24) zum Erzeugen und Messen eines zweiten Magnetfeldflusses (50b), der durch den bei zu messenden Druck mechanisch belasteten Bereich (48) verläuft, verbunden ist, derart, dass der erste und der zweite Magnetfeldfluss (50a, 50b) in dem bei Druck belasteten Bereich einen Winkel im Bereich zwischen 5° und 175° zueinander bilden.

6. Drucksensor (10) nach einem der voranstehenden Ansprüche,
**dadurch gekennzeichnet,**
**dass** Spulen (24, 28) der magnetoelastischen Spannungserfassungseinrichtung (14) als Planarspulen (32), insbesondere in Leiterplattentechnik, ausgebildet sind.

7. Drucksensor (10) nach einem der voranstehenden Ansprüche,
**dadurch gekennzeichnet,**
**dass** die wenigstens eine Membran (12) auf einer ersten Seite eine mit einem ersten Druck zu beaufschlagende erste Druckkammer (84a) und auf einer gegenüberliegenden Seite eine mit einem zweiten Druck beaufschlagbare zweite Druckkammer (84b) abschließt, wobei die magnetoelastische Spannungserfassungseinrichtung (14) die mechanische Spannung in der Membran (12) durch eine der Druckkammern (84b) hindurch erfasst.

8. Drucksensor (10) nach Anspruch 7,
**dadurch gekennzeichnet,**
**dass** die erste Druckkammer (84a) mit einem ersten Druckkanal (44) zum Beaufschlagen mit einem ersten zu messenden Druck in Fluidverbindung ist und
8.1 die zweite Druckkammer (84b) mit einem zweiten Druckkanal (80) zum Beaufschlagen mit einem zweiten zu messenden Druck in Fluidverbindung ist, um mittels der magnetoelastischen Spannungserfassungseinrichtung (14) einen Differenzdruck zwischen dem ersten Druck und dem zweiten Druck zu messen oder
8.2 die zweite Druckkammer (84b) ein Referenzdruckvolumen (72) mit einem vorbestimmten Referenzdruck bildet, um mittels der magnetoelastische Spannungserfassungseinrichtung (14) den Druck in der ersten Druckkammer durch Vergleich mit dem Referenzdruck als Absolutdruck zu erfassen.

9. Drucksensor (10) nach einem der voranstehenden Ansprüche,
**dadurch gekennzeichnet,**
**dass** eine erste Membran (12) zum Erfassen eines ersten Drucks und eine zweite Membran (16) zur Erfassung eines zweiten Drucks und/oder zur Bereitstellung eines Referenzmesswerts vorgesehen sind.

10. Drucksensor (10) nach Anspruch 9,
**dadurch gekennzeichnet,**
**dass** das eine erste magnetoelastische Spannungserfassungseinrichtung (14) zum Erfassen einer auf der ersten Membran (12) wirkenden mechanischen Belastung und eine zweite magnetoelastische Spannungserfassungseinrichtung (18) zum Erfassen einer auf der zweiten Membran (16) wirkenden mechanischen Belastung und eine Auswerteeinrichtung (54) zum Bestimmen eines Differenzwerts aus Ausgängen der ersten und der zweiten magnetoelastischen Spannungserfassungseinrichtung (14, 18) vorgesehen sind.

11. Verfahren zum Messen eines Druckes, umfassend:
a) Beaufschlagen einer Membran (12) mit dem zu messenden Druck und
b) Erzeugen eines magnetischen Flusses (50) in einem Bereich (48), der durch die Druckbeaufschlagung mechanisch belastet wird und
c) Messen einer durch die Druckbeaufschlagung der Membran (12) erzeugten mechanischen Spannung mittels des magnetoelastischen Effekts durch Erfassen der Änderung der Richtung von Magnetfeldlinien des magnetischen Flusses.

12. Verfahren nach Anspruch 11,
**dadurch gekennzeichnet,**
**dass** Schritt b) Erzeugen des magnetischen Flusses (50) in einem durch die Druckbeaufschlagung mechanisch belasteten Bereich (48) der zumindest teilweise aus ferromagnetischen Material gebildeten Membran (12) enthält und
**dass** Schritt c) Messen der mechanischen Spannung an der Membran (12) durch Erfassen einer Änderung der Magnetfeldlinien in der Membran (12) enthält.

13. Verfahren nach einem der Ansprüche 11 oder 12,
**gekennzeichnet durch**:
Erfassen eines Differenzdrucks zwischen einem ersten Druck und einem zweiten Druck **durch** Beaufschlagen der Membran (12) mit dem ersten Druck auf einer ersten Seite und mit dem zweiten Druck auf einer gegenüberliegenden zweiten Seite.

14. Verfahren nach einem der Ansprüche 11 oder 12,
**gekennzeichnet durch**
Erfassen eines Absolutdrucks **durch** Beaufschlagen einer ersten Seite der Membran (12) mit dem zu messenden Druck und Beaufschlagen der gegenüberliegenden zweiten Seite der Membran (12) mit einem vorbestimmten Referenzdruck und Bestimmen des Absolutdrucks **durch** Erfassen der Differenz zwischen zu messenden Druck und Referenzdruck.

15. Verfahren nach einem der voranstehenden Ansprüche,
**gekennzeichnet durch**
Vorsehen einer nicht **durch** den Druck beaufschlagten Referenzmembran (16) und magnetoelastisches Erfassen einer mechanischen Spannung an der Referenzmembran (16) um einen Referenzwert zu erhalten, wobei ein Messsignal differentiell **durch** Vergleich eines **durch** magnetoelastisches Erfassen einer mechanischen Spannung an der druckbeaufschlagten Membran (12) erhaltenen Wert und des Referenzwerts erhalten wird.
